# EUROPEAN PATENT SPECIFICATION

(11) **EP 3 291 338 B1**
(45) Date of publication and mention of the grant of the patent: **12.08.2020**
(21) Application number: 16846819.7
(22) Date of filing: 09.09.2016
(51) Int. Cl.: H01M 4/136, H01M 4/1397, H01M 4/587, H01M 4/58, H01M 4/36, H01M 4/62, H01M 10/052

(54) **CATHODE FOR LITHIUM-SULFUR BATTERY, MANUFACTURING METHOD THEREFOR, AND LITHIUM-SULFUR BATTERY CONTAINING SAME**
KATHODE FÜR LITHIUM-SCHWEFEL-BATTERIE, HERSTELLUNGSVERFAHREN DAFÜR UND LITHIUM-SCHWEFEL-BATTERIE DAMIT
CATHODE POUR PILE LITHIUM-SOUFRE, SON PROCÉDÉ DE FABRICATION, ET PILE LITHIUM-SOUFRE LA CONTENANT

(30) Priority: 14.09.2015 KR 20150129704
(43) Date of publication of application: 07.03.2018
(73) Proprietor: LG Chem, Ltd., Yeongdeungpo-gu Seoul 07336 (KR)
(72) Inventor: KIM, Yun Kyoung, Daejeon 34122 (KR); YANG, Doo Kyung, Daejeon 34122 (KR); KWON, Ki Young, Daejeon 34122 (KR); PARK, In Tae, Daejeon 34122 (KR)
(74) Representative: Hoffmann Eitle
(86) International application number: PCT/KR2016/010187
(87) International publication number: WO 2017/047998

(56) References cited:
- EP-A2- 2 717 365
- WO-A2-2014/027272
- KR-A- 20120 051 549
- KR-A- 20140 092 389
- KR-A- 20150 045 304
- KR-B1- 100 484 642
- US-A1- 2011 165 466
- LI, G. ET AL.: 'Sulfur/microporous Carbon Composites for Li-S Battery' IONICS vol. 21, no. 8, 2015, pages 2161 - 2170, XP035522332

## Description

### [Technical Field]

This application claims priorities to Korean Patent Application No. 10-2015-0129704 filed on September 14, 2015 and Korean Patent Application No. 10-2016-0116285 filed on September 9, 2016.

The present invention relates to a positive electrode for a lithium-sulfur battery, a manufacturing method therefor and a lithium-sulfur battery containing the same, wherein the positive electrode comprises a conductive material and an active material, each of which contains sulfur, thereby increasing the sulfur content in the electrode, securing the high conductivity, broadening the driving voltage range, and securing the additional battery capacity.

### [Background Art]

Recently, as the areas of portable electronic equipments and electric vehicles are rapidly developed, miniaturization, weight lightening and high performance of electronic products and communication devices are fast progressed. According to this, secondary batteries having a high energy density are much more required as the power supply of these products.

Among such secondary batteries, the lithium-sulfur battery using a sulfur-based material as a positive electrode active material has the energy density of 2,800 Wh/kg (1,675 mAh/g) which is much higher than that of the other batteries. Also, since the sulfur-based material used as a positive electrode active material is abundant, cheap and environmentally friendly, it is noted as giving such advantages that the supply of active material is easy, it is environmentally friendly, and the expression of high energy density is possible.

The existing lithium-sulfur battery generally uses a sulfur-based compound having a sulfur-sulfur bond (S-S bond) as a positive electrode active material and a carbon-based material wherein an alkali metal such as lithium or a metal ion such as lithium ion, etc. is inserted/de-inserted as a negative electrode active material. Thus, in storing and generating electric energy, they use a redox reaction wherein the S-S bond is cleaved to decrease the oxidation number of S during the reduction reaction (when discharged) and the S-S bond is reformed to increase the oxidation number of S during the oxidation reaction (when charged).

2Li + S₈ (Solid) ↔ Li₂S₈ (Solution)

2Li + Li₂S₈ (Solution) ↔ 2Li₂S₄ (Solution)

2Li + Li₂S₄ (Solution) ↔ 2Li₂S₂ (Solution)

2Li + Li₂S₂ (Solution) ↔ 2Li₂S (Solid Precipitate)

However, the existing lithium-sulfur battery shows such a problem that lithium polysulfide (Li₂Sₓ, x>1) formed on the positive electrode during the charging/discharging reaction is lost out of the positive electrode reaction region, thereby declining its lifetime characteristics.

If lithium polysulfide is spread out to get out of the electrochemical reaction region of the positive electrode, the amount of sulfur participated in the electrochemical reaction at the positive electrode is decreased, which eventually causes capacity loss. Furthermore, when lithium polysulfide reacts with the lithium metal negative electrode to fix lithium sulfide (Li₂S) on the surface of lithium metal due to the continuous charging/discharging reaction, the reaction activity is lowered and the potential characteristic is deteriorated.

In order to solve the above problem, it has been previously proposed to add the active material sulfur in bulk form, but which gives such disadvantages that the reaction in the initial stage is not uniform and the separation membrane is torn to increase the possibility of internal short circuit.

It was also proposed to form a free-standing shape of the active material sulfur on a carbon sheet and then laminate the sheet to give a multi-ply, but which shows the difficulty of applying it to the mass production and the battery manufacturing process.

In addition, a method of adding an active material in the form of soluble polysulfide (Li₂Sₓ, 4≤x≥8) has been proposed. However, this method shows the drawbacks that it takes a long time period for synthesizing the soluble polysulfide and the amount of active material sulfur that can be added is limited.

Besides the above, a variety of attempts of using a conductive complex containing sulfur as a positive electrode active material, applying a protective layer to the surface of electrode, decreasing the size of sulfur as a positive electrode active material of a lithium-sulfur battery, using a solvent having low viscosity and high solubility for polysulfide, forming a sulfur/carbon composite by adding the carbon which has a large specific surface area, and the like have been made.

However, when a sulfur/carbon composite is formed by adding the carbon which has a large specific surface area, the content of sulfur is fixed. On the contrary, since the density of sulfur is relatively lowered due to the carbon, the battery capacity is limited.

### [Prior Arts]

### [Patent Documents]

1. Japanese Patent No.5142415
2. Korean Patent Laid-open Publication No.2015-0043407
3. Japanese Patent Laid-open Publication No.2015-0092449
4. Korean Patent Laid-open Publication No.2014-0107582

### [Non-patent Documents]

1. J. W. Choi et al., Nano Lett. 2013, 13, 4532-4538
2. J. W. Choi et al., Adv. Funct. Mater. 2014, Vol.24, p.5359-5367

### [Disclosure]

### [Technical Problem]

It is an object of the present invention to provide a positive electrode for a lithium-sulfur battery, which can overcome low battery capacity caused by the decrease in the density of sulfur and thus enhance battery capacity and lifetime.

It is another object of the present invention to provide a method of manufacturing the positive electrode for a lithium-sulfur battery.

It is still another object of the present invention to provide a lithium-sulfur battery comprising the positive electrode for a lithium-sulfur battery.

### [Technical Solution]

According to one preferable embodiment of the present invention, there is provided a positive electrode for a lithium-sulfur battery which comprises a positive electrode active material including a sulfur-carbon composite, and a conductive material including a sulfur-carbon compound.

The sulfur-carbon compound may be a compound having a chemical bond of sulfur (S)-carbon (C).

The conductive material including the sulfur-carbon compound may have the conductivity of 0.01 to 0.05 S/cm.

The sulfur-carbon composite may have the structure that the surfaces of sulfur particles are surrounded by carbon particles.

The sulfur-carbon composite may have the size of 1 to 5 µm, the sulfur particle may have the size of 1 to 5 µm, and the carbon particle may have the size of 10 to 50 nm.

According to another preferable embodiment of the present invention, there is provided a lithium-sulfur battery which comprises a positive electrode and a negative electrode faced each other, and a separator disposed between the positive electrode and the negative electrode, wherein the positive electrode has a layer of positive electrode active material which comprises a positive electrode active material including a sulfur-carbon composite, and a conductive material including a sulfur-carbon compound.

The layer of positive electrode active material may comprise the sulfur-carbon compound in the amount of 2 to 25% by weight based on the total weight of the layer of positive electrode active material.

According to still another preferable embodiment of the present invention, there is provided a method of manufacturing a positive electrode for a lithium-sulfur battery, which comprises the steps of forming a positive electrode active material including a sulfur-carbon composite, forming a conductive material including a sulfur-carbon compound, and mixing the positive electrode active material including a sulfur-carbon composite and the conductive material including a sulfur-carbon compound to form a layer of positive electrode active material.

The sulfur-carbon compound may be prepared by the steps of mixing a sulfur precursor and a carbon precursor and thermally treating the mixture.

The step of thermally treating the mixture may be carried out for 1 to 12 hours at the temperature of 300 to 600 °C under inert gas atmosphere.

The sulfur-carbon composite may be prepared by mixing sulfur particles and carbon particles and then ball-milling the mixture.

### [Advantageous Effects]

The lithium-sulfur battery of the present invention can overcome low battery capacity caused by the decrease in the density of sulfur and thus enhance capacity characteristics and battery lifetime characteristics.

### [Description of Drawings]

Figure 1 is a schematic diagram of a positive electrode for a lithium-sulfur battery comprising the sulfur-carbon composite and the sulfur-carbon compound according to an example of the present invention.
Figure 2 is a diagram of the lithium-sulfur battery according to an example of the present invention.
Figure 3 is a scanning electron microscope (SEM) image of the sulfur-carbon compound synthesized in Preparation 2 of the present invention.
Figure 4 is a result of thermogravimetric analysis (TGA) of the sulfur-carbon compound synthesized in Preparation 2 of the present invention.
Figure 5 shows the charge/discharge characteristics of the lithium-sulfur battery as measured in Experiment 1 of the present invention.
Figure 6 shows the lifetime characteristics of the lithium-sulfur battery as measured in Experiment 2 of the present invention.

### [Best Mode]

Hereinafter, the present invention will be explained in detail by referring to the accompanying drawings for the examples of the present invention so that a person of ordinary skill in this art can easily practice it. However, the present invention may be realized in various manners and is not limited to the examples provided herein.

The terms are used in the present invention for illustrating only certain examples, and are not intended to limit the present invention. The singular forms "a", "an" and "the" include the plural forms unless the context clearly dictates otherwise. The terms "comprise," "have," etc. as used herein should be understood to indicate the presence of features, figures, steps, actions, elements, components, or combinations thereof described in the present specification, but not to exclude in advance the possibility of presence or addition of one or more other features, figures, steps, actions, elements, components, or combinations thereof.

The sulfur battery as used herein means all batteries comprising elemental sulfur (S₈), a sulfur-based compound, or a mixture thereof as a positive electrode active material. Specifically, a lithium-sulfur battery, a sodium-sulfur battery or a magnesium-sulfur battery, and the like may be mentioned. Below, the present invention is mainly explained based on the lithium-sulfur battery, but it is not limited thereto.

The positive electrode for a lithium-sulfur battery according to an embodiment of the present invention comprises a positive electrode active material including a sulfur-carbon composite, and a conductive material including a sulfur-carbon compound. The positive electrode for a lithium-sulfur battery comprises a sulfur-carbon composite as a positive electrode active material, and additionally comprises a sulfur-carbon compound as a conductive material, and thus can enhance capacity characteristics and lifetime of the battery.

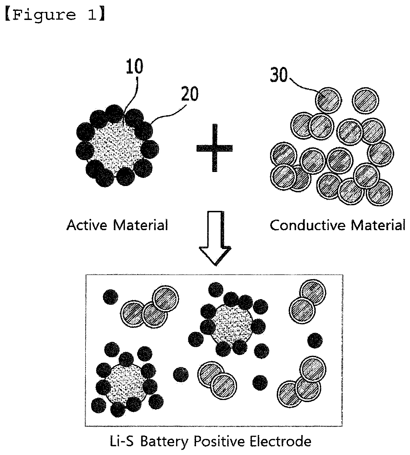

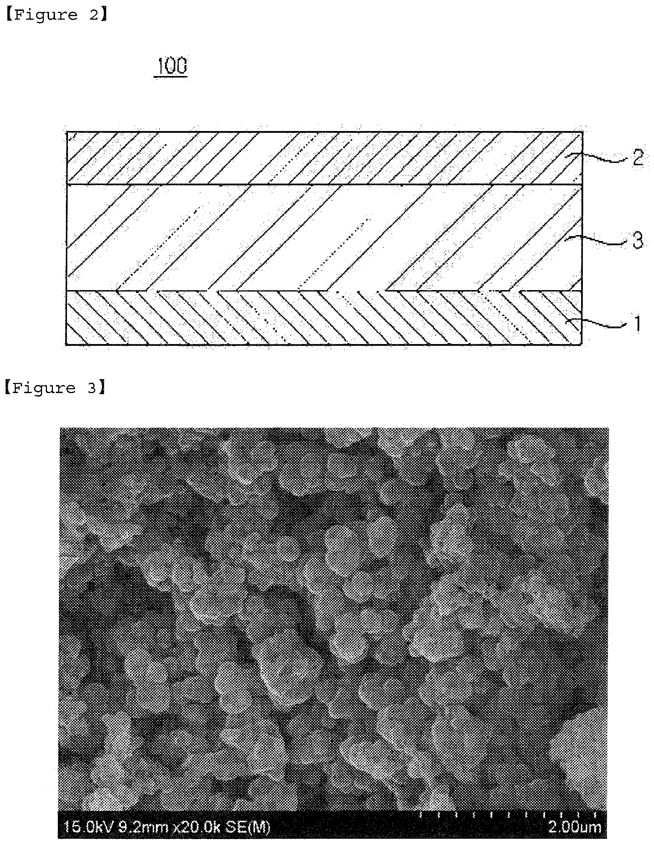

Figure 1 is a schematic diagram of a positive electrode for a lithium-sulfur battery according to an example of the present invention, which comprises the sulfur-carbon composite as an active material and the sulfur-carbon compound as a conductive material. Figure 2 is a schematic diagram of the lithium-sulfur battery according to an example of the present invention. Figures 1 and 2 are examples for illustrating the present invention only, and the present invention is not limited thereto.

Hereinafter, by referring to Figures 1 and 2, the lithium-sulfur battery according to an example of the present invention is explained. The lithium-sulfur battery (100) comprises a positive electrode (1) and a negative electrode (2) faced each other, a separator (3) disposed between the positive electrode (1) and the negative electrode (2), and an electrolyte (not depicted).

### [Positive Electrode]

In the lithium-sulfur battery (100), for example, the positive electrode (1) is placed in a positive electrode current collector and on the positive electrode current collector, and it may have a layer of positive electrode active material which comprises a positive electrode active material, a conductive material, and optionally a binder.

It may be desirable to use, concretely, aluminum foam, nickel foam, and the like having excellent conductivity as the positive electrode current collector.

In addition, the layer of positive electrode active material may comprise a sulfur-carbon composite as the positive electrode active material, which gives the advantages that the degree of dispersion of sulfur increases due to the carbon having a large specific surface area and that the surface for reaction is broadened due to the decreased size of sulfur particles.

The sulfur-carbon composite may be a mixture of sulfur particles and carbon particles.

The sulfur particle may be concretely selected from a sulfur compound such as elemental sulfur (S₈), Li₂Sₙ (n≥1), organic sulfur compound, carbon-sulfur polymer ((C₂Sₓ)ₙ, x=2.5∼50, n≥2), or mixtures thereof, and the carbon particle may be carbon black, acetylene black, ketjen black, carbon nanotube (CNT), graphene, graphite, activated carbon, or the like.

The sulfur particles and the carbon particles may be mixed in the weight ratio of 9.9:0.1 to 0.1:9.9, preferably in the weight ratio of 9:1 to 7:3 to form the sulfur-carbon composite.

The positive electrode active material may be included in the amount of 70% by weight or more, preferably 70 to 90% by weight based on the total weight of the layer of positive electrode active material. The shortage of positive electrode active material may cause the problem of decrease of battery capacity when the positive electrode active material is included in the amount of less than 70% by weight, and the contents of binder and conductive material may not be sufficient to make the formation of uniform positive electrode composition difficult when the positive electrode active material is included in the amount of above 90% by weight.

Also, the sulfur-carbon composite preferably has the size in the range of 1 to 5 µm. More specifically, as schematically depicted in Figure 1, the sulfur-carbon composite has the structure that the surfaces of large sulfur particles are surrounded by the relatively small carbon particles. The sulfur particles constituting the sulfur-carbon composite have the size in the range of 1 to 5 µm, and the carbon particles constituting the sulfur-carbon composite have the size in the range of 10 to 50 nm. Only, the sulfur-carbon composite may include various composites having different particle size and shape.

The sulfur-carbon composite may be prepared by the steps of mixing the above sulfur particles and carbon particles and uniformizing the particle size after mixing, or applying them to a post-treatment.

More specifically, the step of mixing the sulfur particles and the carbon particles may include mixing them and then subjecting them to a ball-milling process. The ball-milling process may be carried out under the condition of 100 to 1,000 rpm. The process time for the mixing may be too long when the ball-milling process is carried out under the condition of 100 rpm or less, and it may be difficult to control the particle size under the condition of above 1,000 rpm.

In addition, the layer of positive electrode active material may further comprise a conductive material for the smooth migration of electrons inside the positive electrode (1) and a binder for enhancing binding strength between the positive electrode active materials or between the positive electrode active material and the positive electrode current collector, along with the above described positive electrode active material.

The conductive material may comprise a sulfur-carbon compound. The sulfur-carbon compound is a conductive compound having a chemical bond of sulfur (S)-carbon (C) and may be selected from CS, CS₂, C₃S₂, H₂CS₃, H₂CS₄, and mixtures thereof. It is not limited to the above, however, and any of the materials wherein carbon and sulfur are chemically combined may be used.

As the carbon precursor included in the sulfur-carbon compound, a carbon-based material such as carbon black, acetylene black, ketjen black, denka black, super P, carbon nanotube (CNT); a conductive polymer such as polyaniline, polythiophene, polyacetylene, polypyrrole; or a carbon precursor such as polyacrylonitrile (PAN), polyvinyl alcohol, cellulose, phenol resin, pitch, etc. may be used.

And the sulfur precursor included in the sulfur-carbon compound may be a sulfur compound such as elemental sulfur (S₈), Li₂Sₙ (n≥1), organic sulfur compound, carbon-sulfur polymer ((C₂Sₓ)ₙ, x=2.5∼50, n≥2), or mixtures thereof.

More specifically, the sulfur-carbon compound may be prepared by the steps of mixing the carbon precursor and the sulfur precursor, thermally treating the mixture, and optionally pulverizing the product of thermal treatment.

The mixing process may be performed with 1 to 1000 parts by weight of the sulfur precursor per 1 part by weight of the carbon precursor. More preferably, 1 to 100 parts by weight of the sulfur precursor may be used per 1 part by weight of the carbon precursor.

When the sulfur precursor is added in the amount of less than 1 part by weight per 1 part by weight of the carbon precursor, it cannot smoothly play the role that the insufficient sulfur content in the active material of sulfur-carbon composite is compensated through the preparation of sulfur-based conductive material, whereby the battery capacity may be decreased. Otherwise, the content of sulfur precursor exceeding 1000 parts by weight may cause the problem that the sulfur precursor is not uniformly reacted with the carbon precursor. In that case, both carbon and sulfur are chemically combined to lower the conductivity of the compound, and there is a concern about losing the characteristics as a conductive material.

The process of thermal treatment may be carried out for 1 to 12 hours at the temperature of 300 to 600 °C under inert gas atmosphere.

The energy required for the combination reaction of sulfur-carbon compound may be insufficient when the thermal treatment process is performed for less than 1 hour at the temperature of less than 300 °C, and sulfur may be gradually vaporized and evaporated to rather decrease the sulfur content in the compound when the thermal treatment process is performed for above 12 hours at 600 °C.

Also, the inert gas in the thermal treatment process may more preferably be selected from nitrogen, argon, helium and neon, and the thermal treatment may be carried out by providing the inert gas in the rate of 100 to 1,000 sccm while heating to the temperature of thermal treatment in the rate of 1 to 50 °C/min.

The conductive material including the sulfur-carbon compound as prepared above may have the spherical particle shape in the size of 1 to 5 µm as shown in the scanning electron microscope (SEM) image of Figure 3, and this image may be the same as the schematic diagram for the conductive material of sulfur-carbon compound depicted in Figure 1.

The conductive material of sulfur-carbon compound has the conductivity of 0.010 to 0.099 S/cm, more preferably 0.01 to 0.05 S/cm, when analyzed by EIS (electrochemical impedance spectroscopy).

It may be desirable that the conductive material is contained in the amount of 2 to 25% by weight based on the total weight of the layer of positive electrode active material. The effect of enhancing conductivity through the addition of conductive material may be relatively insufficient when the conductive material is contained in the amount of less than 2% by weight, and the content of positive electrode active material may be relatively low to deteriorate the capacity characteristics when the conductive material is contained in the amount of above 25% by weight.

Also, the conductive material in the layer of positive electrode active material may be used together with other conductive materials having small specific surface area. The conductive material having small specific surface area may be a sulfur-carbon compound which is prepared by mixing a carbon-based material such as carbon black, acetylene black, ketjen black, denka black, super P, carbon nanotube (CNT); a conductive polymer such as polyaniline, polythiophene, polyacetylene, polypyrrole; or a carbon precursor such as polyacrylonitrile (PAN), polyvinyl alcohol, cellulose, phenol resin, pitch, etc.; or a mixture thereof with sulfur and then carbonizing them.

The binder plays a role of making a paste of the positive electrode active material, mutual adhesion between the active materials, mutual adhesion between the active material and the conductive material, adhesion between the active material and the current collector, or the like. Specifically, the binder may include poly(vinyl acetate), polyvinyl alcohol, polyethylene oxide, polyvinylpyrrolidone, alkylated polyethylene oxide, crosslinked polyethylene oxide, polyvinyl ether, poly(methyl methacrylate), polyvinylidene fluoride, copolymer of polyhexafluoropropylene and polyvinylidene fluoride (trade name: Kynar), poly(ethyl acrylate), polytetrafluoroethylene, polyvinyl chloride, polyacrylonitrile, polyvinyl pyridine, polystyrene, derivatives, blends and copolymers thereof, and the like.

It may also be desirable that the binder is included in the amount of 5 to 20% by weight based on the total weight of the layer of positive electrode active material. When the binder is used in the amount of less than 5% by weight, the effect of improving binding strength between the positive electrode active materials, or between the positive electrode active material and the positive electrode current collector, or between the positive electrode active material and the conductive material due to the use of binder may be trivial. On the contrary, when the binder is used in the amount of above 20% by weight, the content of positive electrode active material may become relatively small to deteriorate the capacity characteristics.

The positive electrode (1) as above may be manufactured according to a conventional method. Specifically, it may be manufactured by mixing the positive electrode active material, the conductive material and the binder in an organic solvent to give a composition for forming the positive electrode active material, applying this composition on the positive electrode current collector, drying and optionally rolling it.

At this time, it is desirable to use an organic solvent which is capable of uniformly dispersing the positive electrode active material, the binder and the conductive material and being easily evaporated. Specifically, acetonitrile, methanol, ethanol, tetrahydrofuran, water, isopropyl alcohol, and the like may be mentioned.

### [Negative Electrode]

On the other hand, in the above lithium-sulfur battery (100), the negative electrode (2) may comprise the one selected from the group consisting of a material capable of reversible intercalation or deintercalation of a lithium metal, a lithium alloy, and a lithium ion, and a material capable of reversibly forming a lithium-containing compound through the reaction with a lithium ion, as the negative electrode active material.

As the material capable of reversible intercalation/deintercalation of a lithium ion, any carbon-based negative electrode active material which is a carbon material and is generally used in a lithium-sulfur battery may be used. Specifically, crystalline carbon, amorphous carbon or both may be used. Also, a typical example of the material capable of reversibly forming a lithium-containing compound through the reaction with a lithium ion may include tin oxide (SnO₂), titanium nitrate, silicon (Si), and the like, but is not limited thereto. The lithium metal alloy, specifically, may be an alloy of lithium with a metal of Si, Al, Sn, Pb, Zn, Bi, In, Mg, Ga, or Cd.

In addition, the negative electrode (2) may further comprise a conductive material for the smooth migration of electrons inside the negative electrode (2) along with the above described negative electrode active material.

The conductive material may be a carbon-based material such as carbon black, acetylene black, or ketjen black; or a conductive polymer such as polyaniline, polythiophene, polyacetylene, or polypyrrole. It may be desirable to include the conductive material in the amount of 5 to 20% by weight based on the total weight of the layer of negative electrode active material. When the conductive material is used in the amount of less than 5% by weight, the effect of improving conductivity due to the use of conductive material may be trivial. On the contrary, when the conductive material is used in the amount of above 20% by weight, the content of negative electrode active material may become relatively small to deteriorate the capacity characteristics.

In addition, the negative electrode (2) may further optionally comprise a binder playing a role of making a paste of the negative electrode active material, improving the mutual adhesion between the active materials or between the active material and the current collector, buffering against the expansion and contraction of the active material, or the like, along with the above stated negative electrode active material.

Specifically, the binder may be the same as the binder constituting the layer of positive electrode active material as previously explained.

In addition, the negative electrode (2) may further comprise a negative electrode current collector for the purpose of supporting the negative electrode active layer containing the negative electrode active material, the conductive material and the binder.

Specifically, the negative electrode current collector may be selected from the group consisting of copper, aluminum, stainless steel, titanium, silver, palladium, nickel, alloys thereof, and combinations thereof. The stainless steel may be surface-treated with carbon, nickel, titanium or silver, and the alloy may be an aluminum-cadmium alloy. Besides the above, baked carbon, a non-conductive polymer of which surface is treated with a conductive material, a conductive polymer, and the like may also be used.

In addition, the negative electrode (2) may be a thin film of a lithium metal.

### [Separator]

In the lithium-sulfur battery (100), the separator (3) is a physical separator having the function of physically separating the electrodes, and any separator may be used without special limit so long as it is conventionally used as a separator in a lithium-sulfur battery. In particular, the one having low resistance against the ion migration of electrolyte and excellent ability of being filled with electrolyte is preferable. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, and the like may be used alone or as a laminate. Otherwise, a conventional porous nonwoven fabric, for example, a nonwoven fabric made of a glass fiber having a high melting point, polyethylene terephthalate fiber, or the like may be used, but the separator is not limited thereto.

### [Electrolyte]

In the lithium-sulfur battery (100), the electrolyte comprises a non-aqueous organic solvent and a lithium salt.

Specifically, the non-aqueous organic solvent may be a polar solvent such as an aryl compound, a bi-cyclic ether, an acyclic carbonate, a sulfoxide compound, a lactone compound, a ketone compound, an ester compound, a sulfate compound, a sulfite compound, and the like.

More specifically, the non-aqueous organic solvent may include 1,2-dimethoxyethane, 1,2-diethoxyethane, 1,2-dibutoxy ethane, dioxolane (DOL), 1,4-dioxane, tetrahydrofuran, 2-methyltetrahydrofuran, dimethyl carbonate (DMC), diethyl carbonate (DEC), ethyl methyl carbonate (EMC), methyl propyl carbonate (MPC), ethyl propyl carbonate, dipropyl carbonate, butyl ethyl carbonate, ethyl propanoate (EP), toluene, xylene, dimethyl ether (DME), diethyl ether, triethylene glycol monomethyl ether (TEGME), diglyme, tetraglyme, hexamethyl phosphoric triamide, gamma butyrolactone (GBL), acetonitrile, propionitrile, ethylene carbonate (EC), propylene carbonate (PC), N-methylpyrrolidone, 3-methyl-2-oxazolidone, acetic acid ester, butyric acid ester, propionic acid ester, dimethylformamide, sulfolane (SL), methyl sulfolane, dimethyl acetamide, dimethyl sulfoxide, dimethyl sulfate, ethylene glycol diacetate, dimethyl sulfite, ethylene glycol sulfite, and the like.

Among these, a solvent mixture of triethylene glycol monomethyl ether / dioxolane / dimethyl ether may be more preferable.

In addition, any compound capable of providing a lithium ion used in a lithium secondary battery may be used as the lithium salt without special limit. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂ (Lithium bis(perfluoroethylsulfonyl)imide, BETI), LiN(CF₃SO₂)₂ (Lithium bis(Trifluoromethanesulfonyl)imide, LiTFSI), LiN(CₐF₂ₐ₊₁SO₂)(C_{b}F_{2b+1}SO₂) (provided that a and b are natural numbers, preferably 1≤a≤20 and 1≤b≤20), lithium poly[4,4'-(hexafluoroisopropylidene)diphenoxy]sulfonylimide (LiPHFIPSI), LiCl, LiI, LiB(C₂O₄)₂, and the like. Among these, sulfonyl group-containing imide lithium compounds such as LiTFSI, BETI, LiPHFIPSI, and the like may be more preferable.

In addition, the lithium salt may be preferably contained in the electrolyte in the concentration of 0.6 to 2 M. The electrolyte performance may be deteriorated due to the lowered conductivity of electrolyte when the concentration of lithium salt is less than 0.6 M, and the mobility of lithium ion may be reduced due to the increased viscosity of electrolyte when the concentration exceeds 2 M.

The electrolyte may further comprise additives ('other additives,' below), which may be generally used in the electrolyte for the purposes of enhancing the lifetime characteristics of battery, suppressing the decrease of battery capacity, enhancing the discharge capacity of battery, etc., besides the aforementioned components of electrolyte.

As explained above, the lithium-sulfur battery (100) according to the present invention comprises the conductive material of sulfur-carbon compound as well as the active material of sulfur-carbon composite, thereby showing such effects as improvement in charge/discharge capacity characteristics and enhancement of electrode lifetime. Thus, it is useful in the areas requiring a fast charge speed, for example, portable devices such as a mobile phone, a laptop computer, a digital camera, a camcorder, etc., electric vehicles such as hybrid electric vehicles (HEV), plug-in hybrid electric vehicles (plug-in HEV, PHEV), etc., and medium to large energy storage systems.

### [Mode for Invention]

Hereinafter, some preferable examples are provided to help the understanding of the present invention. However, the following examples are merely to illustrate the present invention and not to limit the scope thereof.

### [Preparation 1: Preparation of a sulfur-carbon composite]

A sulfur powder and a carbon powder were mixed in the weight ratio of 9:1 to form a composite. More specifically, elemental sulfur (S₈, average particle size: 5 µm) and a carbon powder (carbon black(Super P)) were mixed in the weight ratio of 9:1 and then ball-milled for 1 hour under the condition of 500 rpm to give a sulfur-carbon composite.

### [Preparation 2: Preparation of a sulfur-carbon compound]

12.5 g of polyacrylonitrile (PAN) and 50 g of sulfur (S) were mixed in a ball mill for 12 hours under 300 rpm. This mixture was heated to 450 °C in the rate of 10 °C/min while flowing nitrogen in the rate of 500 sccm, and in that state the mixture was thermally treated for 6 hours to form a sulfur-carbon compound. This sulfur-carbon compound was pulverized to a powder form for 30 minutes using a mortar to give a powder of sulfur-carbon compound conductive material.

The SEM image of the above prepared sulfur-carbon compound conductive material is as depicted in Figure 3. The conductivity measured by EIS (electrochemical impedance spectroscopy) was 0.035 S/cm, and the components measured through EA (elemental analysis) are shown in the following Table 1.

**[Table 1]**

| Component | Content in sulfur-carbon compound (%) |
|---|---|
| Sulfur | 41.50 |
| Carbon | 41.56 |
| Nitrogen | 15.28 |
| Hydrogen | 0.68 |

In the above sulfur-carbon compound, sulfur and carbon are chemically combined, differently from a composite wherein sulfur and carbon are physically mixed. Thus, the sulfur-carbon compound shows characteristics different from the composite when their thermophysical properties are measured.

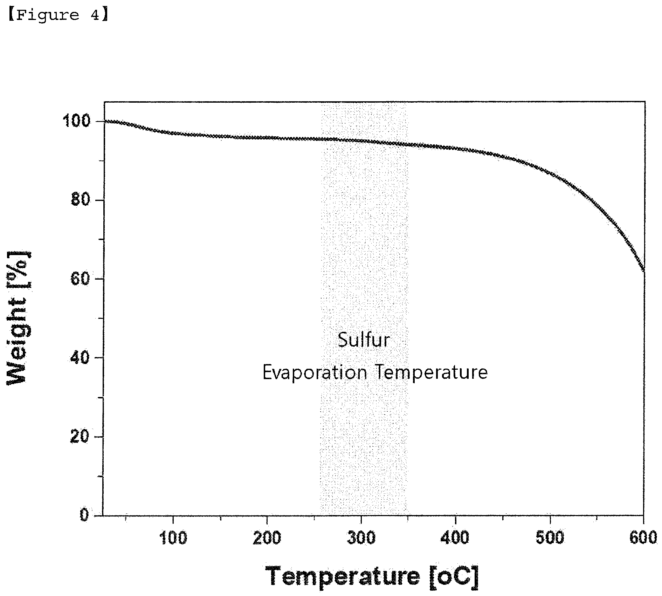

Figure 4 is a result of thermogravimetric analysis (TGA) of the sulfur-carbon compound synthesized in the above Preparation 2. As confirmed by Figure 4 which is a TGA curve of the sulfur-carbon compound synthesized in Preparation 2, the sulfur-carbon compound of Preparation 2 did not show the evaporation of sulfur at around 300 °C at which sulfur was evaporated from the sulfur-carbon composite.

### [Preparation 3: Manufacture of a lithium-sulfur battery]

### <Example>

In an organic solvent consisting of tetraethylene glycol dimethyl ether (TEGDME)/dioxolane (DOL)/dimethoxyethane (DME)(mixing volume ratio=1/1/1) were dissolved 1 M concentration of lithium bis(trifluoromethanesulfonyl)imide (LiTFSI) and 0.1 M concentration of lithium nitrate (LiNO₃) to prepare an electrolyte.

The positive electrode active material, the conductive material and the binder were mixed in the ratio of 75:20:5 using a ball-mill to give a composition for forming a layer of positive electrode active material. At this time, the sulfur-carbon composite obtained in Preparation 1 as the positive electrode active material, the sulfur-carbon compound obtained in Preparation 2 as the conductive material, and SBR/CMC in the ratio of 1:1 as the binder were used, wherein the mixing ratio of active material:conductive material:binder by weight was 75:20:5. The resulting composition for forming a layer of positive electrode active material was applied to an aluminum current collector and then dried to give a positive electrode (1) (Energy Density of Positive Electrode: 1.0 mAh/cm²).

In addition, a lithium metal having the thickness of 150 µm was used as a negative electrode (2).

A porous polyethylene separator (3) coated with a graphene film was disposed between the above prepared positive electrode and negative electrode to manufacture an electrode assembly. This electrode assembly was placed inside a case, and the electrolyte prepared above was introduced into the case to give a lithium-sulfur battery.

### <Comparative Example 1: Reference lithium-sulfur battery having no conductive material of sulfur-carbon compound>

The reference lithium-sulfur battery was prepared according to the same procedure as Example 1 except that denka black was used instead of the sulfur-carbon compound conductive material of Preparation 2.

### <Comparative Example 2: Lithium-sulfur battery using a metal sulfide as a conductive material>

A lithium-sulfur battery was prepared according to the same procedure as Example 1 except that a metal sulfide CoS₂ was used instead of the sulfur-carbon compound conductive material of Preparation 2.

### [Experiment 1: Evaluation of capacity characteristics of lithium-sulfur batteries]

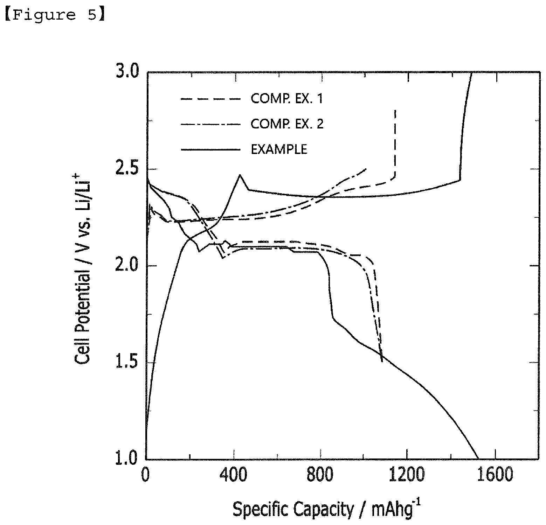

The batteries manufactured in the above example and comparative examples were subjected to discharge at 0.1C and charge at 0.1C at the temperature of 25 °C to measure the capacity (mAh), and were repeatedly charged/discharged to measure the capacity and charging efficiency. The results are shown in Figure 5.

As depicted in Figure 5, Comparative Example 1 (reference electrode) which used denka black as a conductive material and Comparative Example 2 which used the metal sulfide CoS₂ as a conductive material showed the driving voltage range of about 1.8-2.5 V, whereas Example according to the present invention which used the sulfur-carbon compound as a conductive material showed the higher driving voltage range of 1-3 V along with the higher charge/discharge capacity.

### [Experiment 2: Evaluation of lifetime characteristics of lithium-sulfur batteries]

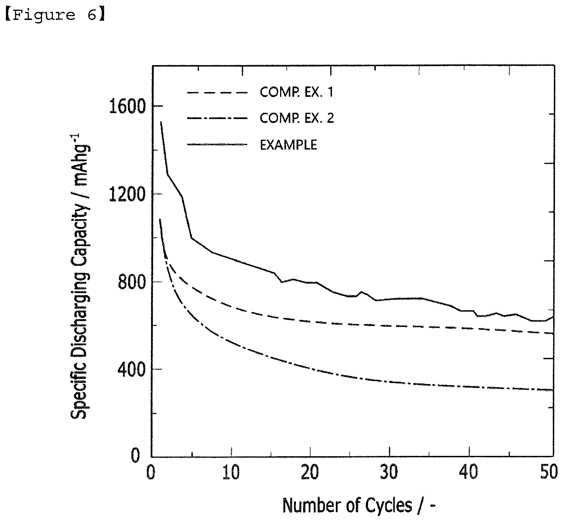

The batteries manufactured in the above example and comparative examples were subjected to charge/discharge of 50 cycles to evaluate the battery lifetime characteristics, and the results are shown in Figure 6.

As depicted in Figure 6, Example according to the present invention which used the sulfur-carbon compound as a conductive material was confirmed to show higher battery capacity as well as relatively longer battery lifetime due to the small capacity decrease during the repetition of cycle than Comparative Example 1 (reference electrode) which used denka black as a conductive material and Comparative Example 2 which used the metal sulfide CoS₂ as a conductive material.

The desirable example of the present invention is described in detail above. However, the scope of the present invention is not limited thereto. Various changes and modifications by one of ordinary skill in the art from the basic concept of the present invention as defined in the following claims also fall within the scope of the present invention.

### [Symbols in Drawings]

- 1:: Positive Electrode
- 2:: Negative Electrode
- 3:: Separator
- 10:: Sulfur
- 20:: Carbon
- 30:: Sulfur-carbon compound
- 100:: Lithium-sulfur battery

### [Industrial Applicability]

The present invention relates to a positive electrode for a lithium-sulfur battery, a manufacturing method therefor and a lithium-sulfur battery containing the same, wherein the positive electrode for a lithium-sulfur battery comprises a positive electrode active material including a sulfur-carbon composite, and a sulfur-carbon compound.

## Claims

1. A positive electrode for a lithium-sulfur battery which comprises
a positive electrode active material including a sulfur-carbon composite, and
a conductive material including a sulfur-carbon compound,
wherein the sulfur-carbon composite has the structure that the surfaces of sulfur particles are surrounded by carbon particles.

2. The positive electrode for a lithium-sulfur battery according to Claim 1, wherein the sulfur-carbon compound is a compound having a chemical bond of sulfur (S)-carbon (C).

3. The positive electrode for a lithium-sulfur battery according to Claim 1, wherein the conductive material including the sulfur-carbon compound has the conductivity of 0.01 to 0.05 S/ cm, as measured by electrochemical impedance spectroscopy as described in the specification.

4. The positive electrode for a lithium-sulfur battery according to Claim 1, wherein the sulfur-carbon composite has the size of 1 to 5 µm, the sulfur particle has the size of 1 to 5 µm, and the carbon particle has the size of 10 to 50 nm, as measured by scanning electron microscopy (SEM) as described in the specification.

5. A lithium-sulfur battery which comprises
a positive electrode and a negative electrode faced each other, and
a separator disposed between the positive electrode and the negative electrode,
wherein the positive electrode has a layer of positive electrode active material which comprises a positive electrode active material including a sulfur-carbon composite, and a conductive material including a sulfur-carbon compound, wherein the sulfur-carbon composite has the structure that the surfaces of sulfur particles are surrounded by carbon particles.

6. The lithium-sulfur battery according to Claim 5, wherein the layer of positive electrode active material comprises the sulfur-carbon compound in the amount of 2 to 25% by weight based on the total weight of the layer of positive electrode active material.

7. A method of manufacturing a positive electrode for a lithium-sulfur battery, which comprises the steps of
forming a positive electrode active material including a sulfur-carbon composite,
forming a conductive material including a sulfur-carbon compound, and
mixing the positive electrode active material including a sulfur-carbon composite and the conductive material including a sulfur-carbon compound to form a layer of positive electrode active material, wherein the sulfur-carbon composite has the structure that the surfaces of sulfur particles are surrounded by carbon particles.

8. The method of manufacturing a positive electrode for a lithium-sulfur battery according to Claim 7, wherein the sulfur-carbon compound is prepared by the steps of mixing a sulfur precursor and a carbon precursor and thermally treating the mixture.

9. The method of manufacturing a positive electrode for a lithium-sulfur battery according to Claim 8, wherein the step of thermally treating the mixture is carried out for 1 to 12 hours at the temperature of 300 to 600 °C under inert gas atmosphere.

10. The method of manufacturing a positive electrode for a lithium-sulfur battery according to Claim 7, wherein the sulfur-carbon composite is prepared by mixing sulfur particles and carbon particles and then ball-milling the mixture.

## Patentansprüche

1. Positive Elektrode für eine Lithium-Schwefel-Batterie, die
ein positives Elektrodenaktivmaterial einschließlich eines Schwefel-Kohlenstoff-Komposits und
ein leitfähiges Material einschließlich einer Schwefel-Kohlenstoff-Verbindung umfasst,
wobei das Schwefel-Kohlenstoff-Komposit eine Struktur aufweist, in der Oberflächen von Schwefelpartikeln von Kohlenstoffpartikeln umgeben sind.

2. Positive Elektrode für eine Lithium-Schwefel-Batterie gemäß Anspruch 1, wobei die Schwefel-Kohlenstoff-Verbindung eine Verbindung mit einer chemischen Schwefel (S)-Kohlenstoff (C)-Bindung ist.

3. Positive Elektrode für eine Lithium-Schwefel-Batterie gemäß Anspruch 1, wobei das leitfähige Material einschließlich der Schwefel-Kohlenstoff-Verbindung eine Leitfähigkeit von 0,01 bis 0,05 S/cm, gemessen durch elektrochemische Impedanzspektroskopie wie in der Beschreibung beschrieben, aufweist.

4. Positive Elektrode für eine Lithium-Schwefel-Batterie gemäß Anspruch 1, wobei das Schwefel-Kohlenstoff-Komposit eine Größe von 1 bis 5 µm aufweist, das Schwefelpartikel eine Größe von 1 bis 5 µm aufweist und das Kohlenstoffpartikel die Größe von 10 bis 50 nm aufweist, gemessen durch ein Rasterelektronenmikroskop (REM) wie in der Beschreibung beschrieben.

5. Lithium-Schwefel-Batterie, die
eine positive Elektrode und eine negative Elektrode, die einander gegenüberstehen, und
einen Separator, der zwischen der positiven Elektrode und der negativen Elektrode angeordnet ist, umfasst,
wobei die positive Elektrode eine Schicht aus positiven Elektrodenaktivmaterial aufweist, das ein positives Elektrodenaktivmaterial einschließlich eines Schwefel-Kohlenstoff-Komposits und ein leitfähiges Material einschließlich einer Schwefel-Kohlenstoff-Verbindung umfasst, wobei das Schwefel-Kohlenstoff-Komposit eine Struktur aufweist, in der die Oberflächen von Schwefelpartikeln von Kohlenstoffpartikeln umgeben sind.

6. Lithium-Schwefel-Batterie gemäß Anspruch 5, wobei die Schicht aus positivem Elektrodenaktivmaterial die Schwefel-Kohlenstoff-Verbindung in einer Menge von 2 bis 25 Gew.-%, bezogen auf das Gesamtgewicht der Schicht aus positivem Elektrodenaktivmaterial, umfasst.

7. Verfahren zur Herstellung einer positiven Elektrode für eine Lithium-Schwefel-Batterie, das die Schritte
Bilden eines positiven Elektrodenaktivmaterials einschließlich eines Schwefel-Kohlenstoff-Komposits,
Bilden eines leitfähigen Materials einschließlich einer schwefel-Kohlenstoff-Verbindung und
Mischen des positiven Elektrodenaktivmaterials einschließlich eines Schwefel-Kohlenstoff-Komposits und des leitfähigen Materials einschließlich einer Schwefel-Kohlenstoff-Verbindung, um eine Schicht aus positivem Elektrodenaktivmaterial zu bilden, wobei das Schwefel-Kohlenstoff-Komposit eine Struktur aufweist, in der die Oberflächen von Schwefelpartikeln von Kohlenstoffpartikeln umgeben sind.

8. Verfahren zur Herstellung einer positiven Elektrode für eine Lithium-Schwefel-Batterie gemäß Anspruch 7, wobei die Schwefel-Kohlenstoff-Verbindung durch die Schritte Mischen eines Schwefelvorläufers und eines Kohlenstoffvorläufers und Wärmbehandeln der Mischung hergestellt wird.

9. Verfahren zur Herstellung einer positiven Elektrode für eine Lithium-Schwefel-Batterie gemäß Anspruch 8, wobei der Schritt zum Wärmebehandeln der Mischung für 1 bis 12 Stunden bei einer Temperatur von 300 bis 600°C unter einer Inertgasatmosphäre durchgeführt wird.

10. Verfahren zur Herstellung einer positiven Elektrode für eine Lithium-Schwefel-Batterie gemäß Anspruch 7, wobei das Schwefel-Kohlenstoff-Komposit durch Mischen von Schwefelpartikeln und Kohlenstoffpartikeln und anschließendes Kugelmahlen der Mischung hergestellt wird.

## Revendications

1. Électrode positive pour une pile lithium-soufre qui comprend
un matériau actif d'électrode positive incluant un composite soufre-carbone, et
un matériau conducteur incluant un composé soufre-carbone,
dans laquelle le composite soufre-carbone présente la structure dont les surfaces de particules de soufre sont entourées par des particules de carbone.

2. Électrode positive pour une pile lithium-soufre selon la revendication 1, dans laquelle le composé soufre-carbone est un composé présentant une liaison chimique de soufre (S)-carbone (C).

3. Électrode positive pour une pile lithium-soufre selon la revendication 1, dans laquelle le matériau conducteur incluant le composé soufre-carbone présente la conductivité de 0,01 à 0,05 S/cm, mesurée par spectroscopie d'impédance électrochimique tel que décrit dans les spécifications.

4. Électrode positive pour une pile lithium-soufre selon la revendication 1, dans laquelle le composite soufre-carbone présente la taille de 1 à 5 µm, la particule de soufre présente la taille de 1 à 5 µm, et la particule de carbone présente la taille de 10 à 50 nm, mesurées par microscopie électronique par balayage (MEB) tel que décrit dans les spécifications.

5. Pile lithium-soufre qui comprend
une électrode positive et une électrode négative face à face, et
un séparateur disposé entre l'électrode positive et l'électrode négative,
dans laquelle l'électrode positive présente une couche de matériau actif d'électrode positive qui comprend un matériau actif d'électrode positive incluant un composite soufre-carbone, et un matériau conducteur incluant un composé soufre-carbone, dans lequel le composite soufre-carbone présente la structure dont les surfaces de particules de soufre sont entourées par des particules de carbone.

6. Pile lithium-soufre selon la revendication 5, dans laquelle la couche de matériau actif d'électrode positive comprend le composé soufre-carbone en une quantité de 2 à 25 % en poids sur la base du poids total de la couche de matériau actif d'électrode positive.

7. Procédé de fabrication d'une électrode positive pour une pile lithium-soufre, qui comprend les étapes de
formation d'un matériau actif d'électrode positive incluant un composite soufre-carbone,
formation d'un matériau conducteur incluant un composé soufre-carbone, et
mélange du matériau actif d'électrode positive incluant un composite soufre-carbone et du matériau conducteur incluant un composé soufre-carbone pour former une couche de matériau actif d'électrode positive, dans lequel le composite soufre-carbone présente la structure dont les surfaces de particules de soufre sont entourées par des particules de carbone.

8. Procédé de fabrication d'une électrode positive pour une pile lithium-soufre selon la revendication 7, dans lequel le composé soufre-carbone est préparé selon les étapes de mélange d'un précurseur de soufre et d'un précurseur de carbone et de traitement thermique du mélange.

9. Procédé de fabrication d'une électrode positive pour une pile lithium-soufre selon la revendication 8, dans lequel l'étape de traitement thermique du mélange est réalisée pendant 1 à 12 heures à la température de 300 à 600 °C dans une atmosphère de gaz inerte.

10. Procédé de fabrication d'une électrode positive pour une pile lithium-soufre selon la revendication 7, dans lequel le composite soufre-carbone est préparé en mélangeant des particules de soufre et des particules de carbone puis en broyant le mélange avec un broyeur à billes.
